**Europäisches Patentamt**

**European Patent Office**

**Office européen des brevets**

(19)

(11) Numéro de publication : **0 265 471 B1**

## (12) FASCICULE DE BREVET EUROPEEN

(45) Date de publication du fascicule du brevet :
29.01.92 Bulletin 92/05

(51) Int. Cl.⁵ : **B26D 1/60**

(21) Numéro de dépôt : **87902558.3**

(22) Date de dépôt : **24.04.87**

(86) Numéro de dépôt international :
**PCT/FR87/00140**

(87) Numéro de publication internationale :
**WO 87/06518 05.11.87 Gazette 87/24**

(54) **DISPOSITIF DE TRONCONNAGE D'UN TUBE FABRIQUE EN CONTINU.**

(30) Priorité : 25.04.86 FR 8606046

(43) Date de publication de la demande :
04.05.88 Bulletin 88/18

(45) Mention de la délivrance du brevet :
29.01.92 Bulletin 92/05

(84) Etats contractants désignés :
AT BE CH DE FR GB IT LI LU NL SE

(56) Documents cités :
EP-A- 0 125 175
FR-A- 2 392 806
GB-A- 1 106 471
US-A- 2 582 332
US-A- 3 121 360
US-A- 3 150 574
US-A- 3 253 490

(73) Titulaire : **LHOMME SA**
**Route de Paris**
**F-89140 Pont sur Yonne (FR)**

(72) Inventeur : **LANGUILLAT, Jean-Paul**
**Vallières**
**F-89260 Thorigny sur Oreuse (FR)**
Inventeur : **RAVAL, Patrick**
**66, Avenue Monseigneur Mouezy**
**F-35000 Rennes (FR)**

(74) Mandataire : **Chambon, Gérard**
**Cabinet Chambon 6 et 8 avenue Salvador**
**Allende**
**F-93804 Epinay-sur-Seine Cédex (FR)**

## Description

L'invention concerne un dispositif de tronçonnage d'un tube fabriqué en continu, et plus particulièrement d'un tube carton, fabriqué au moyen d'une machine dite "spiraleuse".

Il est connu de fabriquer des tubes de carton de manière continue au moyen, par exemple, d'une "spiraleuse" (destinée à enrouler hélicoïdalement des bandes de papier sur un mandrin).

Il est également connu de tronçonner le tube au cours de sa fabrication et un dispositif de tronçonnage particulièrement intéressant est décrit dans le brevet FR-2545752 au nom du même déposant.

Ce dispositif antérieur comporte un chariot porte-couteaux, monté de manière mobile en translation, et qui est entraîné par l'extrémité du tube lui-même au moyen d'une butée reliée mécaniquement audit chariot, de telle sorte que ledit chariot est en mouvement parfait de synchronisme avec le défilement du tube (ce qui est nécessaire au moment de la coupe), des moyens étant prévus pour le retour du chariot en position initiale.

En outre, des systèmes de cames permettent d'actionner les couteaux au cours du mouvement du chariot porte-couteaux.

Ce dispositif connu présente toutefois des limites.

En effet, le temps du cycle aller et retour du chariot correspondant à une coupe est important, ce qui limite les longueurs minimales admises.

L'entraînement du chariot par la tranche d'extrémité du tube, limite l'épaisseur minimale possible de celui-ci (détérioration de ladite tranche pour des épaisseurs trop faibles).

La mise en place et le réglage de la butée d'entraînement du chariot en cas de changement de la longueur désirée pour chaque tronçon, nécessite un arrêt obligatoire de la machine et donc, une perte de temps, ainsi qu'une gâche.

Le brevet US-2,582,332 représentant l'état de la technique selon le préambule de la revendication 1 décrit un dispositif de tronçonnage d'un tube fabriqué en continu, comportant un chariot porte-outil de coupe qui est mû en translation par une mécanique d'entraînement et qui est muni de moyens d'actionnement de l'outil de coupe et de moyens de retour en position initiale après chaque tronçonnage, ladite mécanique d'entraînement étant actionnée par un premier moteur rotatif asservi en rotation à la vitesse de défilement du tube, et par l'intermédiaire d'un premier système d'embrayage qui est asservi à un dispositif de détermination des longueurs des tronçons à obtenir.

Le brevet US-3,253,490 montre quant à lui, un dispositif de cisaillage de feuilles métalliques comportant notamment un chariot dont le dispositif d'entraînement est à vitesse variable.

L'inventeur a imaginé un dispositif du type mentionné ci-avant à propos du premier brevet US cité et comportant un chariot porte-couteaux, mais qui est remarquable en ce que le dispositif de détermination des longueurs des tronçons à obtenir comporte des moyens de détection aménagés pour commander, après chaque retour en position initiale du chariot suite à un tronçonnage, la fonction embrayage du système d'embrayage dès que lesdits moyens ont détecté qu'une nouvelle longueur précise du tube a défilé depuis le début du cycle de tronçonnage précédent, de telle sorte que le chariot est mis brusquement en mouvement translatif, pour atteindre une vitesse sensiblement synchrone avec la vitesse de défilement du tube au moment de la pénétration des couteaux grâce à ladite mécanique d'entraînement asservie.

Le fait d'utiliser des moyens mécaniques pour actionner le déplacement du chariot permet d'avoir des démarrages plus brusques et donc de réduire la durée de chaque cycle de tronçonnage et par là même, de diminuer les longueurs minimales possibles, tandis que l'asservissement du système d'embrayage à un dispositif de détermination des longueurs des tronçons permet une grande souplesse de travail en programmant ou en modifiant lesdites longueurs au cours de la fabrication même du tube.

Selon une possibilité, le système d'embrayage est débrayé au cours de la pénétration des couteaux dans la paroi du tube, au moins jusqu'à ce que lesdits couteaux cessent leur action de tronçonnage, de telle sorte que le chariot et sa mécanique sont entraînés pendant ce temps par le tube lui-même qui est en prise avec lesdits couteaux.

La mécanique d'entraînement est, par exemple, du type bielle-manivelle et comporte une bielle dont le pied est articulé au chariot et dont la tête est en prise avec un bras tournant du système d'embrayage.

Il est toutefois parfaitement évident qu'il est possible aussi d'utiliser d'autres moyens classiques ou non, telle que, par exemple, une coulisse à la place de la bielle, ladite coulisse étant solidaire d'un arbre coulissant capable d'entraîner le chariot porte-couteaux...

Sans que cela soit strictement obligatoire (le moteur et le système d'embrayage mentionnés ci-avant étant suffisants), mais pour réduire le temps d'un cycle de tronçonnage et donc permettre de couper des tronçons plus courts comme déjà dit ci-avant, les moyens de retour en position initiale du chariot, comportent en outre, un mécanisme de retour qui agit à la fin de chaque tronçonnage, alors que le système d'embrayage est débrayé. Le mécanisme de retour mentionné ci-avant est par exemple formé par un ou plusieurs vérins pneumatiques. Toutefois, un tel mécanisme ne s'avère pas très souple d'emploi car il est difficile de moduler son action en fonction du régime de marche de la machine. Les inventeurs ont notamment trouvé qu'il pouvait être intéressant de conserver une proportion entre les vitesses de course respectivement aller et retour du chariot porte-couteaux, sensiblement constante afin d'éviter les risques de retours trop rapides au moment des réglages et à faible vitesse de fabrication. C'est pourquoi les inventeurs préconisent un dispositif qui est remarquable en ce que le mécanisme de retour comporte un second moteur d'entraînement qui est associé avec un second système d'embrayage, tandis qu'un système différentiel est combiné avec respectivement, ledit second système d'embrayage, le premier moteur d'entraînement, et le premier système d'embrayage, de manière telle qu'il soit notamment possible d'augmenter la vitesse de retour du chariot par rapport à sa vitesse aller au moyen dudit second moteur et dudit différentiel.

Avantageusement dans le cas d'un système muni d'un mécanisme particulier de retour en position initiale du chariot (verins ou second moteur par exemple), le premier système d'embrayage comporte de plus une fonction de freinage tandis qu'un moyen de repérage de position de la mécanique d'entraînement agit sur ladite fonction de freinage, de manière telle que le mécanisme de retour du chariot positionne la mécanique d'entraînement au voisinage, mais en deçà, de sa position initiale, ledit premier système étant alors réembrayé jusqu'à ce que le moyen de repérage de position agisse sur la fonction de freinage et de débrayage dudit premier système qui arrête ladite mécanique dans une position déterminée.

Avantageusement aussi pour un dispositif muni d'un mécanisme de retour du genre préconisé ci-avant, les deux moteurs d'entraînement d'une part, et les deux systèmes d'embrayage d'autre part, sont du même type, les systèmes d'embrayage étant en outre tous les deux munis d'une fonction de freinage.

Selon un mode de réalisation qui utilise un chariot du type décrit dans le brevet FR-2545752 précité, c'est-à-dire dans lequel les couteaux sont actionnés par des moyens mécaniques en fonction de la position longitudinale du chariot porte-couteaux, le débrayage du premier système, la commande du mécanisme de retour après tronçonnage et le réembrayage du premier système après ledit retour du chariot, peuvent alors être commandés par des signaux provenant de capteurs de position prévus pour repérer la position dudit chariot et/ou celle d'une pièce en mouvement du dispositif.

Il est clair que jusqu'à présent l'invention peut concerner tout type de fabrication en continu d'un tube (extrusion, spiraleuse...).

Toutefois, l'invention concerne plus particulièrement la fabrication en continu des tubes, au moyen d'une spiraleuse. Il est connu, au moins en partie, notamment comme décrit par exemple dans le brevet FR-2392806, de déterminer les longueurs de tronçons au moyen d'un cylindre entraîné en rotation sans glissement par l'une des bandes constitutives du tube, avant enroulement, et d'un appareil de mesure de la vitesse de rotation dudit cylindre pour agir sur les moyens de tronçonnage. Selon un mode de réalisation de l'invention, les moyens connus sus-mentionnés sont utilisés ici comme moyens d'asservissement du premier moteur d'entraînement, ledit appareil de mesure de la vitesse de rotation agissant sur un moyen de pilotage dudit moteur par l'intermédiaire, éventuellement, d'un moyen de réglage en fonction du type de fabrication, de manière telle que les informations provenant dudit appareil de mesure de la vitesse, éventuellement corrigées par ledit moyen de réglage, commandent le moyen de pilotage qui actionne ledit moteur de façon que la vitesse de rotation que celui-ci transmet au premier système d'embrayage corresponde à une vitesse d'entraînement du chariot qui soit quasi-identique sur une partie au moins de sa course à la vitesse de défilement du tube en formation.

Malgré tout, il y a lieu de noter que si ce mode de réalisation est intéressant, il n'est pas obligatoire (un galet entraîné en rotation sans glissement sur le tube en formation lui-même, pourrait, par exemple, fournir des informations sur la vitesse de défilement dudit tube) etc.

Les moyens et appareils peuvent être de natures diverses. Selon un mode de réalisation, au moins le premier moteur est un moteur électrique pas à pas, l'appareil de mesure de la vitesse comporte une roue codeuse qui est calée sur l'arbre du cylindre et qui coopère avec un capteur, le moyen de pilotage est une commande numérique et l'éventuel moyen de réglage, un convertisseur de fréquence.

Toutefois, ledit moteur peut encore être un moteur électrique à courant continu, à courant alternatif, à champ tournant, les moyens et appareils d'asservissement étant alors adaptés en conséquence, comme il sera décrit ci-après.

Pour la détermination des longueurs des tronçons et l'asservissement du ou des systèmes d'embrayage, plusieurs solutions sont possibles.

Par exemple, le dispositif de détermination des longueurs peut comporter un capteur qui agit sur la fonction embrayage du premier système, lorsqu'il détecte le passage de l'extrémité frontale du tube en formation, tandis que ledit capteur est réglable en position longitudinale de manière à déterminer une longueur préréglée de tronçon qui correspond à la distance comprise entre la position des couteaux au repos et la position dudit capteur.

Selon un autre mode de réalisation pour un tube fabriqué au moyen d'une spiraleuse, le dispositif de détermination des longueurs des tronçons comporte un capteur qui agit sur la fonction embrayage du premier système, lorsqu'il détecte le passage de repères imprimés sur le tube en formation ou sur la dernière bande constitutive dudit tube, avant enroulement, lesdits repères étant imprimés selon des intervalles correspondant aux longueurs voulues des tronçons.

Selon un autre mode de réalisation encore, le dispositif de détermination des longueurs des tronçons comporte un axe entraîné en rotation par un élément tournant de la spiraleuse elle-même, et une roue codeuse qui est calée sur ledit axe et qui coopère avec un capteur et au moins un compteur à présélection qui commande la fonction embrayage du premier système d'embrayage lorsque sont atteintes les valeurs de présélection introduites dans ledit compteur. Toutefois, le moyen de détermination des longueur des tronçons peut comporter, comme déjà dit et de manière en partie connue, un cylindre entraîné par l'une des bandes et tandis que l' appareil de mesure de la vitesse peut être une roue codeuse qui est calée sur l'axe dudit cylindre et qui coopère avec un capteur. Dans ce cas par exemple, au moins un compteur à présélection relié audit capteur commande la fonction embrayage du premier système lorsque sont atteintes les valeurs de présélection introduites dans ledit compteur.

Il est clair dans ce dernier cas que, pour un dispositif déjà muni d'un cylindre et éventuellement d'une roue codeuse et d'un capteur, pour l'asservissement du premier moteur comme mentionné ci-avant, ce ou ces mêmes moyens peuvent servir en parallèle pour agir, d'une part, sur ledit moteur et, d'autre part, sur ledit compteur à présélection.

L'invention sera bien comprise à la lecture de la description qui va suivre et qui se réfère aux dessins annexés dans lesquels:

– la figure 1 est un schéma de principe d'un dispositif selon l'invention,

– la figure 2 est un schéma correspondant à la figure 1 selon un autre mode de réalisation,

– la figure 3 est une élévation d'un dispositif selon l'invention,

– la figure 4 est une vue partielle en plan, et en partie en coupe, de la figure 3,

Les modes de réalisation représentés concernent un dispositif de tronçonnage pour un tube carton fabriqué en continu au moyen d'une spiraleuse mais il est clair qu'ils peuvent s'adapter aussi à d'autres types de fabrication en continu de tubes.

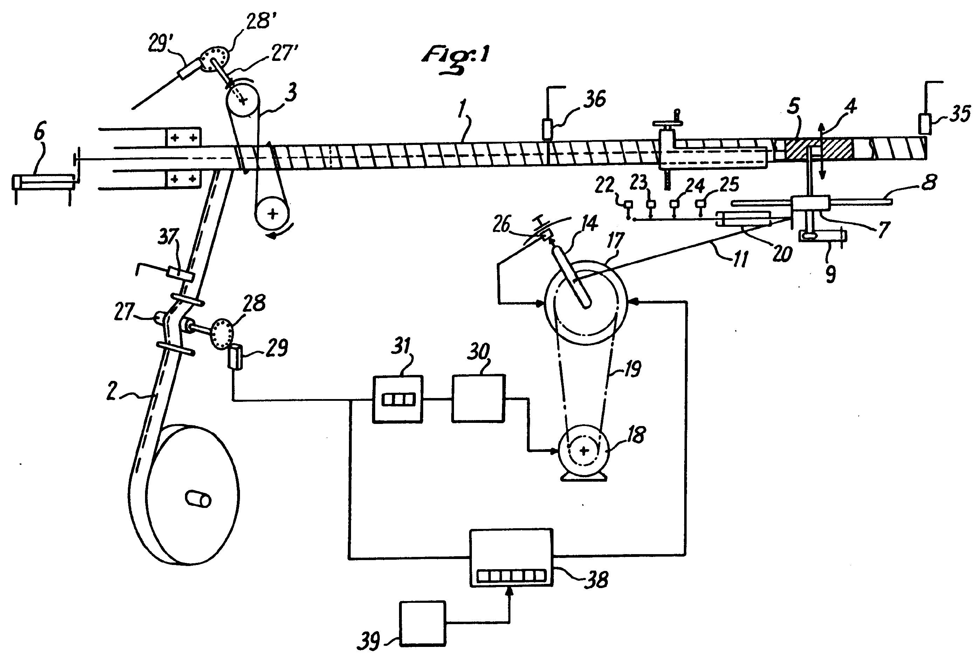

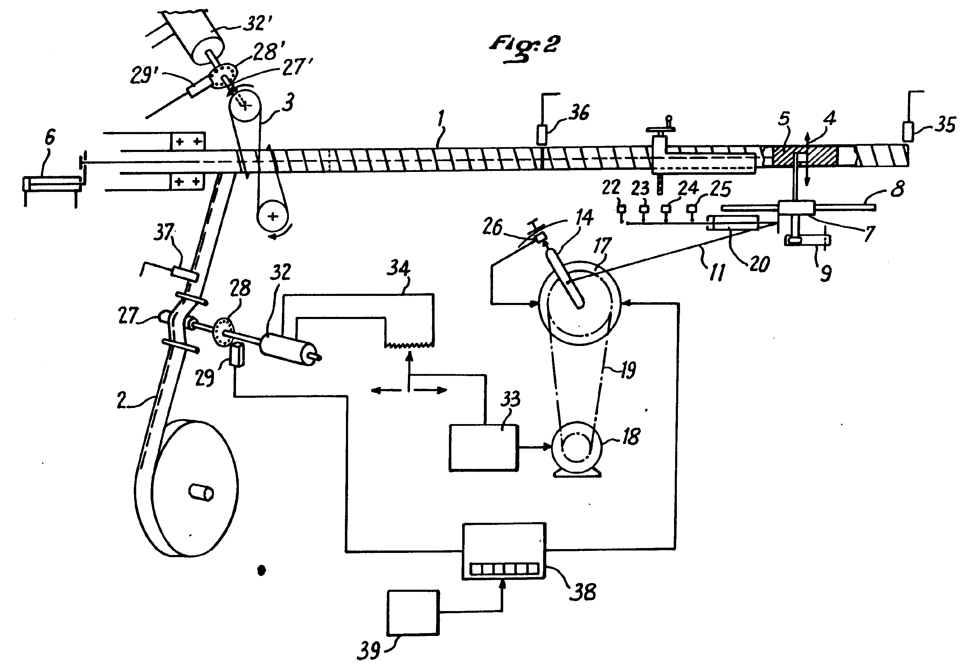

Sur les dessins, un tube 1 est fabriqué en continu par enroulement hélicoïdal de plusieurs bandes, telles que la bande 2 des figures 1 et 2.

Le tube 1 est entraîné en rotation classiquement par une courroie 3 (figure 1 et 2) et tronçonné au cours de sa fabrication par des couteaux 4 (figures 1 à 3), destinés à pénétrer dans la paroi du tube jusqu'à rencontrer un mandrin d'appui 5, muni de moyens de retour en arrière 6 (figures 1 et 2).

Les couteaux 4 (un seul est visible sur les dessins) sont montés pivotant sur un chariot 7.

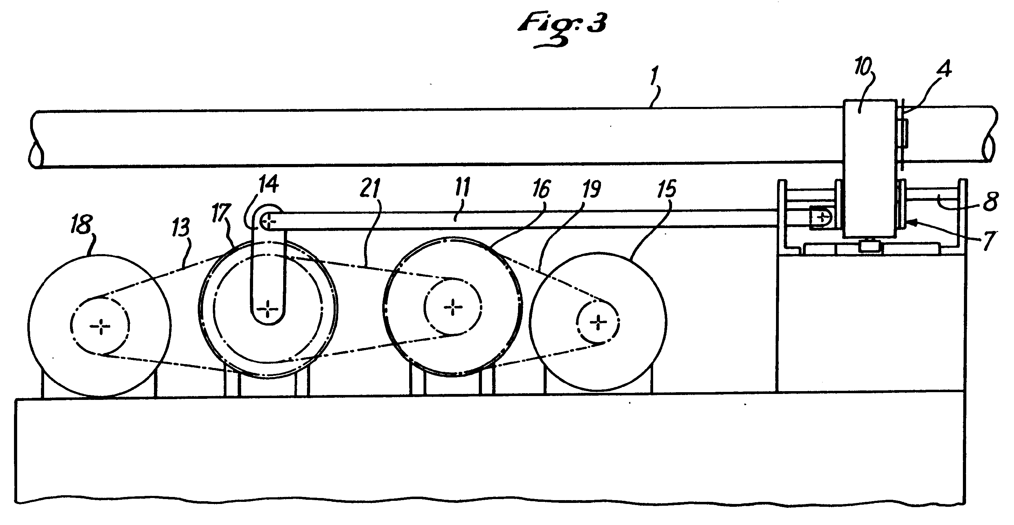

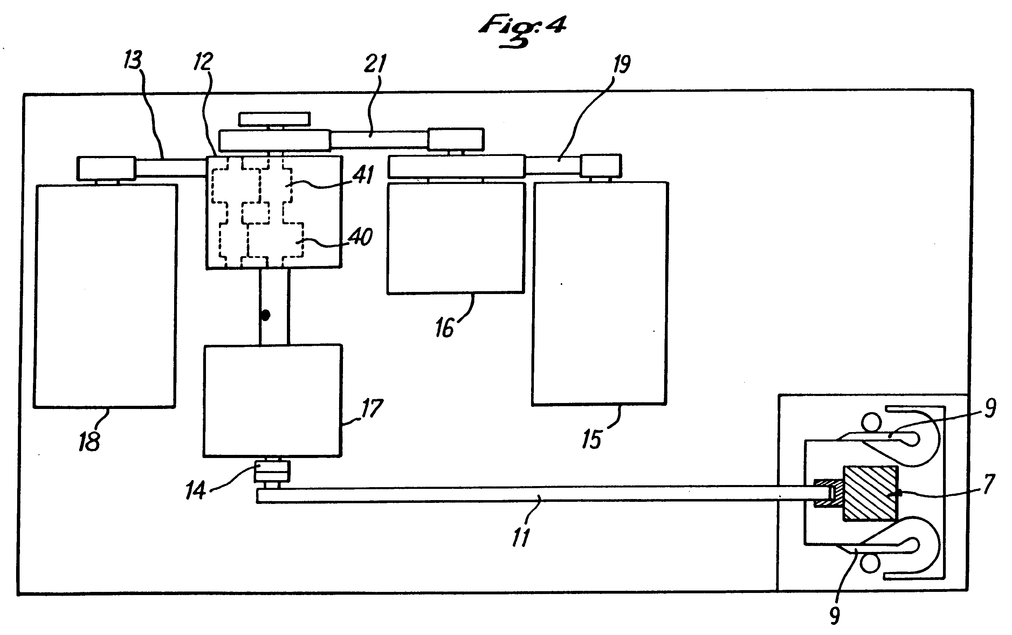

Le chariot 7 est monté translatif longitudinalement au moyen, par exemple, d'une glissière 8, tandis qu'un système de cames 9 (figure 4) permet, en coopérant avec des montures basculantes 10 (figure 3) pour les couteaux, d'obtenir le pivotement desdits couteaux et leur pénétration dans le tube, au cours du déplacement dudit chariot.

Il est inutile de décrire plus en détail cette partie du dispositif que l'on retrouve, pour l'essentiel, dans le brevet FR-2545752 précité (à la différence près de certaines modifications, telles que le raccourcissement des cames 9...).

Par contre, le chariot 7 est entraîné ici en translation par une bielle 11 dont le pied est articulé audit chariot, et la tête est articulée sur un bras ou manivelle 14.

Il est aussi possible d'utiliser, comme déjà dit, d'autres modes de réalisation et par exemple, une coulisse et un arbre à la place de la bielle, ou bien d'autres systèmes encore.

Le bras 14 est solidaire en rotation avec un premier système d'embrayage-frein 17 ou indexeur (bras 14 solidaire de l'arbre de sortie dudit système) qui est entraîné en rotation par un premier moteur 18.

Le moteur 18 permet ainsi d'entraîner en rotation, comme il sera précisé ci-après, le système 17 qui, lui-même, actionne la mécanique bielle-manivelle 11, 14 de telle manière que le chariot 7 peut être entraîné en mouvement de translation alternatif de va et vient.

Si le chariot 7 doit posséder une vitesse de translation parfaitement synchrone avec le défilement du tube 1, comme il sera expliqué ci-après, au moment de la pénétration des couteaux, son retour en arrière peut être accéléré, au lieu d'être simplement actionné par le système 17, de manière à raccourcir la durée du cycle de tronçonnage et par conséquent de diminuer la longueur minimale possible des tronçons. A cette fin, des vérins tels que 20 (figures 1, 2) sont aménagés pour ramener ledit chariot vers sa position initiale arrière après chaque cycle de tronçonnage. Les inventeurs préconisent toutefois d'autres moyens qui remplacent de manière avantageuse lesdits vérins.

Les autres moyens possibles préconisés pour le retour du chariot, sont représentés sur les figures 3 et 4. Ils comportent un second moteur à vitesse variable 15 et un second système d'embrayage-frein 16. Le moteur 15 et le système 16 sont reliés entre eux, par exemple par une courroie 19, tandis qu'un différentiel 12 est interposé entre le moteur 18 et le système 17, ledit différentiel étant relié avec le moteur 18 par une courroie 13, et avec le système 16 par une courroie 21. Le différentiel 12 comporte ici un train épicycloïdal avec notamment un planétaire schématisé en 40 qui entraîne l'arbre du système 17 sur lequel est monté le bras 14. Un autre planétaire 41 est relié mécaniquement au système 16, via la courroie 21, lequel système est relié au moteur 15 via la courroie 19.

C'est la cage porte satellites du train épicycloïdal qui est entraînée par le moteur 18, via la courroie 13.

Pendant la course aller durant laquelle le chariot suit le tube, comme il sera dit ci-après, le système 16 est freiné, de telle sorte que le planétaire 41 ne tourne pas, le différentiel agissant alors comme un simple réducteur.

Au moment de la course retour du chariot 7, on embraye le système 16 qui entraîne alors le planétaire 41 dans le sens convenable tel que la vitesse angulaire du planétaire 40 se trouve majorée proportionnellement à la vitesse du moteur 15. La vitesse du moteur 15 peut avantageusement être asservie porportionnellement à la vitesse du moteur 18, dans un rapport ou proportion ajustable à volonté (rapport qui augmente lorsque les tubes à couper deviennent plus courts de manière à réduire la durée du cycle de tronçonnage).

Il est clair que pour des tronçons de tube assez longs (et plus précisément d'une longueur supérieure à la circonférence du cercle parcourue par la tête de la bielle), il n'est pas nécessaire d'accélérer le mouvement de retour du chariot et, dans ce cas, le système 16 peut être freiné en permanence, tandis que le moteur 15 peut être arrêté. Pour des tubes très longs, il peut même être avantageux de ralentir le mouvement de retour du chariot en inversant le sens de rotation du moteur 15 et en embrayant le système 16, la réduction de vitesse s'effectuant toujours selon un rapport des vitesses des moteurs, qui est ajustable. Cette réduction de la vitesse de retour pourra par exemple permettre une plus grande précision d'arrêt du bras 14, ce qui est un avantage comme on le comprendra mieux ci-après.

Des capteurs de position 22 à 25 (schématisés sur les figures 1 et 2) sont prévus sur le parcours du chariot 7 ou sur le parcours d'une pièce en mouvement soit des vérins 20, (comme dessiné sur les figures 1 et 2), soit des autres moyens utilisés 14, 16 ou 17 par exemple.

Les capteurs 22 à 25 permettent de repérer la position du chariot 7 et par conséquent la position des couteaux au cours de leur cycle de tronçonnage.

C'est ainsi que, selon l'invention, l'un des capteurs 22 à 25 (par exemple le capteur 24) commande le débrayage du système 17 dès que les couteaux 4 pénètrent dans le tube 1, de telle sorte que le chariot 7 et la mécanique 11, 14, sont alors mûs par le tube 1 en prise avec les couteaux (le synchronisme étant alors évidemment parfait entre le chariot et le tube). Toutefois, le débrayage dudit système 17 peut être effectué un peu plus tard, au moment du retour en arrière dudit chariot.

Un autre capteur, par exemple le capteur 25, commande la mise sous pression des vérins 20, ou l'embrayage du système 16 et donc le retour en arrière rapide du chariot (en fin de course du chariot vers l'avant, le passage de la mécanique à son point mort évite un choc), tandis que le capteur 22 de fin de course arrière commande la décompression des vérins ou le débrayage et freinage dudit système 16.

Le capteur 22 de fin de course correspond toutefois à une position du bras 14, légèrement retardé par rapport à sa position initiale, de manière à commander en même temps le réembrayage du système 17, qui va s'arrêter dans une position précise et répétitive par un signal agissant sur sa commande de frein et de débrayage, ledit signal provenant d'un capteur de position 26, sensible à un repère prévu sur une partie tournante de la mécanique (bras 14 par exemple).

Le capteur 23 permet par exemple de commander les moyens d'actionnement 6 du mandrin 5.

Le capteur 26 et le repère correspondant sont disposés de manière à correspondre sensiblement au point mort arrière de la mécanique de manière que ledit système puisse être réembrayé brusquement.

Toutefois, pour fonctionner correctement, le chariot 7 doit être mû en translation, au moment de la pénétration des couteaux, de manière synchrone avec le défilement du tube .

Afin d'obtenir cette synchronisation, le moteur 18 est asservi à la vitesse de défilement du tube.

A cet effet, il était imaginable de prévoir un galet sur le tube formé dont la rotation aurait été proportionnelle à ladite vitesse.

Cependant, un tel système est peu fiable et les inventeurs ont imaginé de prendre l'information sur l'une des bandes constitutives du tube, avant enroulement.

Pour cela (figures 1 et 2), un cylindre 27 est interposé sur le parcours d'une bande (ici la bande 2, figures 1 et 2) de manière que le défilement de celle-ci entraîne ledit cylindre en rotation sans glissement.

Dans le mode de réalisation de la figure 1, sur l'axe du cylindre 27, est calée une roue codeuse 28 dont les repères sont lus par un capteur 29 qui agit sur un moyen de pilotage, ici une commande numérique 30 du moteur 18, ce dernier étant sur la figure 1, un moteur pas à pas.

Entre la roue codeuse 28 et la commande numérique 30, est aménagé un convertisseur de fréquence 31.

Pour un diamètre d'enroulement moyen de la bande 2 et une largeur donnée, il est alors possible de choisir les caractéristiques de la cinématique (diamètre du cylindre 27, nombre de pas de la roue 28, caractéristiques de la commande numérique 30 et du moteur 18, rapport de transmission entre ledit moteur 18 et le système 17) pour que la vitesse de translation transmise au chariot corresponde au mieux à la vitesse de défilement du tube.

Toutefois, il est clair que pour changer le type de fabrication, et notamment le diamètre du tube à former et/ou la largeur de la bande 2, il y a lieu d'introduire un correctif. Le rapport entre la vitesse de défilement du tube 1 et celle de la bande 2 est en effet égale à $\frac{\pi D}{1}$ (où D est le diamètre d'enroulement moyen de la bande et 1 sa largeur) en supposant des spires jointives. Le changement de l'un au moins de ces paramètres est compensable au moyen du convertisseur de fréquence 31 qui agira proportionnellement au changement du rapport précité.

Le convertisseur 31 permet ainsi de changer facilement le type de fabrication en introduisant simplement un facteur de proportionalité.

Le mode de réalisation de la figure 2 correspond à une variante pour un moteur 18, à courant continu. Dans ce mode de réalisation, l'axe du cylindre 27 est en prise ou commun avec celui d'une génératrice tachymétrique 32, le moyen de pilotage du moteur étant ici un variateur de vitesse 33, tandis que le moyen de réglage est un convertisseur de tension 34 (diviseur de tension).

Il est encore possible d'utiliser un moteur électrique 18 à courant alternatif, avec une génératrice tachymétrique, un moyen de pilotage sous la forme d'un variateur de fréquence et un moyen de réglage sous forme d'un convertisseur de fréquence.

D'autres variantes sont encore possibles (moteurs à champ tournant...).

L'invention concerne aussi les moyens de détermination des longueurs des tronçons à obtenir.

Les figures 1 et 2 schématisent plusieurs modes de réalisation possibles.

Pour déterminer les longueurs des tronçons, il suffit de commander l'embrayage du système 17 chaque fois qu'une longueur précise du tube 1 a défilé à partir du tronçonnage précédent.

Pour cela, il est possible de commander la fonction embrayage du système 17 au moyen, par exemple, d'un capteur optique 35, capable de détecter la tranche d'extrémité du tube 1, chaque tronçon étant alors d'une longueur égale à la distance comprise entre ledit capteur 35 et les couteaux 4 au repos (la position du capteur 35 étant bien entendu réglable).

Selon un autre mode de réalisation, un capteur 36 peut lire, et commander en conséquence l'embrayage du système 17, des repères imprimés sur le tube 1. Ces repères sont avantageusement imprimés en biais, avant enroulement, sur la bande 2, qui serait ici la bande de couverture, pour former sur le tube 1 des sortes d'anneaux (et en choisissant convenablement leur position en fonction de la largeur de la bande, puisqu'il s'agit de déterminer une longueur de tronçon sur le tube formé).

Il est encore possible de lire directement sur la bande 2, des repères imprimés au moyen d'un capteur 37, les repères étant positionnés en fonction de la longueur de bande nécessaire à la fabrication d'une certaine longueur de tube.

Toutefois, ces types de repérage présentent certains inconvénients. D'une part, le temps de réponse entre la lecture et l'embrayage du système 17 n'est pas négligeable et, d'autre part, une variation de vitesse du tube en cours de fabrication entre deux lectures entraînent des variations de longueurs sur les tronçons obtenus.

C'est pourquoi il est possible d'utiliser un système déjà connu en partie pour cette fonction et comportant un cylindre 27 et une roue codeuse 28, comme ceux déjà décrits.

Dans le mode de réalisation de la figure 1, le cylindre 27, la roue codeuse 28 et le capteur 29 servent à la fois au synchronisme (pilotage du moteur 18) et à la détermination des longueurs de tronçons. Dans le mode de réalisation de la figure 2, on retrouve ces éléments 27, 28 et 29, mais ces deux derniers sont indépendants de la fonction de synchronisme.

Les informations de la roue codeuse 28 captées par le capteur 29 arrivent sous forme de tops à intervalles proportionnels à la vitesse de défilement de la bande, sur un compteur à présélection 38, lui-même branché sur le système 17. Il suffit ainsi d'afficher sur le compteur à présélection 38, une valeur correspondant à la longueur de bande (en fonction d'abaques, par exemple) nécessaire à la réalisation d'une certaine longueur de tube formé (valeur qui est bien sûr fonction des caractéristiques du tube à former et des caractéristiques du cylindre 27 et de la roue codeuse 28). A chaque fois que la longueur de bande ainsi sélectionnée est atteinte, le compteur 38 envoie un ordre d'embrayage au système 17.

Il serait toutefois possible d'imaginer un moyen de réglage du type décrit en 31 à propos de la figure 1 (voire utiliser le même moyen).

En outre, si les figures 1 et 2 montrent un seul compteur 38, il est bien sûr possible d'utiliser plusieurs compteurs en parallèle, de manière à sélectionner celui qui intéresse un type de fabrication donné.

De même, et par extension, un ordinateur 39 peut charger et vider réguliérement le compteur à présélection en fonction d'un programme préétabli de tronçonnage, de telle sorte que le dispositif selon l'invention devient un véritable coupe-tubes à tronçonnage programmable.

Enfin, la détermination de la longueur des tronçons peut être effectuée au moyen d'un axe 27' entraîné en rotation, non pas par la bande 2, mais par un élément tournant de la spiraleuse elle-même (l'un des organes d'entraînement en rotation du tube, ou autre) comme schématisé sur les figures 1 et 2. Sur l'axe 27' peut alors être calée une roue codeuse 28' tandis qu'un compteur 29' peut être connecté au compteur à présélection 38 déjà décrit. De la même manière, cet ensemble 27', 28', 29' peut aussi servir pour l'asservissement du moteur 18 et c'est pourquoi la figure 2 montre une génératrice tachymétrique 32' qui peut remplacer la génératrice 32.

## Revendications

1. Dispositif de tronçonnage d'un tube (1) fabriqué en continu, comportant un chariot (7) porte-couteaux qui est mû en translation par une mécanique d'entraînement et qui est muni de moyens d'actionnement des couteaux (4) et de moyens de retour en position initiale après chaque tronçonnage, ladite mécanique d'entraînement étant actionnée par un premier moteur rotatif (18) asservi en rotation à la vitesse de défilement du tube (1), et par l'intermédiaire d'un premier système d'embrayage (17) qui est asservi à un dispositif de détermination des longueurs des tronçons à obtenir, caractérisé en ce que le dispositif de détermination des longueurs des tronçons à obtenir comporte des moyens de détection (35;36,37;27',28',29',38;27,28,29,38) aménagés pour commander, après chaque retour en position initiale du chariot (7) suite à un tronçonnage, la fonction embrayage du système d'embrayage dès que lesdits moyens ont détecté qu'une nouvelle longueur précise du tube (1) a défilé depuis le début du cycle de tronçonnage précédent, de telle sorte que le chariot est mis brusquement en mouvement translatif, pour atteindre une vitesse sensiblement synchrone avec la vitesse de défilement du tube au moment de la pénétration des couteaux grâce à ladite mécanique d'entraînement asservie.

2. Dispositif selon la revendication 1, caractérisé en ce que le premier système d'embrayage (17) est débrayé au cours de la pénétration des couteaux (4) dans la paroi du tube (1), au moins jusqu'à ce que lesdits couteaux cessent leur action de tronçonnage, de telle sorte que le chariot et sa mécanique sont entraînés pendant ce temps par le tube lui-même qui est en prise avec lesdits couteaux.

3. Dispositif selon l'une des revendications 1 à 2, caractérisé en ce que la mécanique d'entraînement comporte une bielle (11) dont le pied est articulé au chariot (7) et dont la tête est en prise avec un bras (14) tournant du premier système d'embrayage.

4. Dispositif selon l'une des revendications 1 à 3, caractérisé en ce que les moyens de retour en position initiale du chariot, comportent en outre, un mécanisme de retour (20; 12,15,16) qui agit à la fin de chaque tronçonnage, alors que le premier système d'embrayage (17) est débrayé.

5. Dispositif selon la revendication 4, caractérisé en ce que le mécanisme de retour comporte un second moteur d'entraînement (15) qui est associé avec un second système d'embrayage (16), tandis qu'un système différentiel (12) est combiné avec respectivement, ledit second système d'embrayage, le premier moteur d'entraînement, et le premier système d'embrayage, de manière telle qu'il soit notamment possible d'augmenter la vitesse de retour du chariot par rapport à sa vitesse aller au moyen dudit second moteur (16) et dudit différentiel (12).

6. Dispositif selon l'une des revendications 4 et 5, caractérisé en ce que le premier système d'embrayage (17) comporte de plus une fonction de freinage tandis qu'un moyen de repérage (26) de position de la mécanique d'entrainement agit sur ladite fonction de freinage, de manière telle que le mécanisme de retour (20; 12,15,16) du chariot positionne la mécanique d'entrainement au voisinage, mais en deçà, de sa position initiale, ledit premier système (17) étant alors réembrayé jusqu'à ce que le moyen de repérage de position agisse sur la fonction de freinage et de débrayage dudit premier système qui arrête ladite mécanique dans une position déterminée.

7. Dispositif selon l'une des revendications 5 et 6, caractérisé en ce que les deux moteurs d'entrainement (18,15) d'une part, et les deux systèmes d'embrayage (17,16) d'autre part, sont du même type, les systèmes d'embrayage étant en outre tous les deux munis d'une fonction de freinage.

8. Dispositif selon l'une des revendications 6 et 7 et dont les mouvements de pénétration et de remise en position initiale des couteaux (4) sont actionnés par des moyens mécaniques (9) en fonction de la position longitudinale du chariot (7) porte-couteaux, caractérisé en ce que le débrayage du premier système (17), la commande du mécanisme de retour (20; 12,15,16) après tronçonnage et le réembrayage du premier système après ledit retour du chariot, sont commandés par des signaux provenant de capteurs (22 à 25) de position prévus pour repérer la position dudit chariot et/ou celle d'une pièce en mouvement.

9. Dispositif selon l'une des revendications 1 à 8, pour tube carton fabriqué en continu au moyen d'une spiraleuse, caractérisé en ce que les moyens d'asservissement du premier moteur d'entraînement (18) comportent, un cylindre (27) entraîné en rotation sans glissement par l'une des bandes (2) constitutives du tube (1), avant enroulement, un appareil de mesure de la vitesse de rotation dudit cylindre qui agit sur un moyen de pilotage dudit moteur (18) par l'intermédiaire, éventuellement, d'un moyen de réglage en fonction du type de fabrication, de manière telle que les informations provenant dudit appareil de mesure de la vitesse, éventuellement corrigées par ledit moyen de réglage commandent le moyen de pilotage qui actionne ledit moteur (18) de façon que la vitesse de rotation que celui-ci transmet au premier système d'embrayage (17) corresponde à une vitesse d'entrainement du chariot (7) qui soit quasi-identique sur une partie au moins de sa course à la vitesse de défilement du tube (1) en formation.

10. Dispositif selon la revendication 9, caractérisé en ce qu'au moins le premier moteur (18) est un moteur électrique pas à pas, en ce que l'appareil de mesure de la vitesse comporte une roue codeuse (28) qui est calée sur l'axe du cylindre (27) et qui coopère avec un capteur (29), en ce que le moyen de pilotage est une commande numérique (30) et l'éventuel moyen de réglage, un convertisseur de fréquence (31).

11. Dispositif selon la revendication 9, caractérisé en ce qu'au moins le premier moteur (18) est un moteur électrique à courant continu, en ce que l'appareil de mesure est une génératrice tachymétrique (32) assujétie en rotation au cylindre (27), en ce que le moyen de pilotage est un variateur de vitesse (33) et l'éventuel moyen de réglage, un convertisseur de tension (34).

12. Dispositif selon la revendication 9, caractérisé en ce qu'au moins le premier moteur (18) est un moteur électrique à courant alternatif, en ce que l'appareil de mesure est une génératrice tachymétrique assujétie en rotation au cylindre (27), en ce que le moyen de pilotage est un variateur de fréquence et l'éventuel moyen de réglage, un convertisseur de fréquence.

13. Dispositif selon l'une des revendications 1 à 12, caractérisé en ce que le dispositif de détermination des longueurs des tronçons comporte un capteur (35) qui agit sur la fonction embrayage du premier système (17), lorsqu'il détecte le passage de l'extrémité frontale du tube (1) en formation, tandis que ledit capteur est réglable en position longitudinale de manière à déterminer une longueur préréglée de tronçon qui correspond à la distance comprise entre la position des couteaux (4) au repos et la position dudit capteur (35).

14. Dispositif selon l'une des revendications 1 à 12 pour tube carton fabriqué en continu au moyen d'une spiraleuse, caractérisé en ce que le dispositif de détermination des longueurs des tronçons comporte un capteur (36,37) qui agit sur la fonction embrayage du premier système (17), lorsqu'il détecte le passage de repères imprimés sur le tube (1) en formation ou sur la dernière bande (2) constitutive dudit tube, avant enroulement, lesdits repères étant imprimés selon des intervalles correspondant aux longueurs voulues des tronçons.

15. Dispositif selon l'une des revendications 1 à 12 pour tube carton fabriqué en continu au moyen d'une spiraleuse, caractérisé en ce que le dispositif de détermination des longueurs des tronçons comporte un axe (27') entraîné en rotation par un élément tournant de la spiraleuse elle-même, et une roue codeuse (28') qui est calée sur ledit axe (27') et qui coopère avec un capteur (29') et au moins un compteur à présélection (38) qui commande la fonction embrayage du premier système d'embrayage (17) lorsque sont atteintes les valeurs de présélection introduites dans ledit compteur (38).

16. Dispositif selon l'une des revendications 1 à 12 pour tube carton fabriqué en continu au moyen d'une spiraleuse, et dont le dispositif de détermination des longueurs des tronçons comporte, un cylindre (27) entraîné en rotation sans glissement par l'une des bandes (2) constitutives du tube, avant enroulement, et une roue codeuse (28) qui est calée sur l'arbre dudit cylindre et qui coopère avec un capteur (29), caractérisé en ce qu'au moins un compteur à présélection (38) est relié audit capteur et commande la fonction embrayage du premier système (17) lorsque sont atteintes les valeurs de présélection introduites dans ledit compteur.

17. Dispositif selon l'ensemble des revendications 9 et 16, caractérisé en ce qu'un seul cylindre (27) est prévu pour, d'une part, assurer l'asservissement du premier moteur (18) en agissant sur son moyen de pilotage (30,33) par l'intermédiaire de l'appareil (28, 29; 32) de mesure de la vitesse de rotation dudit cylindre, et, d'autre part, agir sur le compteur à présélection (38).

18. Dispositif selon la revendication 17 pour un dispositif muni d'un moteur pas à pas selon la revendication 10, caractérisé en ce qu'un seul cylindre (27) et une seule roue codeuse (28) coopérant avec un capteur (29) sont prévus pour agir en parallèle d'une part, sur la commande numérique (30) du moteur pas à pas (18), par l'intermédiaire éventuellement du convertisseur de fréquence (31), et d'autre part, sur le compteur à présélection (38).

## Claims

1. Device for cutting a tube (1) manufactured continuously, comprising a knife carriage (7) which is moved in translation by a driving mechanism and which is provided with means for actuating the knives (4) and with means for returning to the initial position after each cutting operation, said driving mechanism being actuated by a first rotary motor (18) slaved in rotation to the speed of passage of the tube (1), and through the intermediary of a first clutch system (17) which is slaved to a device for determining the lengths of the sections to be obtained, characterised in that the device for determining the lengths of the sections to be obtained comprises detecting means (35; 36, 37; 27', 28', 29', 38; 27, 28, 29, 38) arranged in order to initiate the engagement function of the clutch system after each return to the initial position of the carriage (7) following a cutting operation as soon as said means have detected that a new precise length of the tube (1) has passed since the start of the preceding cutting cycle, so that the carriage is sharply set in translation movement, reaching a speed substantially synchronous with the speed of passage of the tube at the moment of penetration of the knives by virtue of said slaved driving mechanism.

2. Device as in claim 1, characterised in that the first clutch system (17) is disengaged in the course of penetration of the knives (4) in the wall of the tube (1), at least until said knives stop their cutting action, so that the carriage and its mechanism are driven during this time by the tube itself which is engaged with said knives.

3. Device as in one of claims 1 to 2, characterised in that the driving mechanism comprises a connecting rod (11) the foot of which is articulated to the carriage (7) and the head of which is engaged with a turning arm (14) of the first clutch system.

4. Device as in one of claims 1 to 3, characterised in that the means for returning to the initial position of the carriage additionally comprise a return mechanism (20; 12, 15, 16) which acts at the end of each cutting operation when the first clutch system (17) is disengaged.

5. Device as in claim 4, characterised in that the return mechanism comprises a second driving motor (15) which is associated with a second clutch system (16), while a differential system (12) is combined respectively with said second clutch system, the first driving motor and the first clutch system, so that it is more particularly possible to increase the speed of return of the carriage in relation to the speed of its outward movement by means of said second motor (16) and said differential (12).

6. Device as in one of claims 4 and 5, characterised in that the first clutch system (17) also comprises a braking function while a position marking means (26) of the driving mechanism acts on said braking function so that the return mechanism (20; 12, 15, 16) of the carriage positions the driving mechanism in the vicinity but short of its initial position, said first system (17) then being re-engaged until the position marking means acts on the braking and disengagement function of said first system which stops said mechanism in a given position.

7. Device as in one of claims 5 and 6, characterised in that the two driving motors (18, 15) on the one hand and the two clutch systems (17, 16) on the other hand are of the same type, both clutch systems being additionally provided with a braking function.

8. Device as in one of claims 6 and 7 and in which the movements of penetration and of returning to the initial position of the knives (4) are actuated by mechanical means (9) according to the longitudinal position of the knife carriage (7), characterised in that the disengagement of the first system (17), the operation of the return mechanism (20; 12, 15, 16) after cutting and the re-engagement of the first system after said return of the carriage are controlled by signals emanating from position sensors (22 to 25) provided to mark the position of said carriage and/or that of a moving part.

9. Device as in one of claims 1 to 8, for cardboard tube manufactured continuously by means of a spiral winding machine, characterised in that the slaving means of the first driving motor (18) comprise a cylinder (27) driven in rotation without slipping by one of the strips (2) forming the tube (1) before winding, an apparatus for measuring the speed of rotation of said cylinder which acts on a controlling means of said motor (18), if necessary through the intermediary of an adjusting means according to the type of production, so that the information emanating from said apparatus for measuring the speed, if necessary corrected by said adjusting means, controls the controlling means which actuates said motor (18) so that the speed of rotation which the latter imparts to the first clutch system (17) corresponds to a driving speed of the carriage (7) which over at least part of its travel is quasi-identical to the speed of passage of the tube (1) being formed.

10. Device as in claim 9, characterised in that at least the first motor (18) is an electric stepper motor, in that the apparatus for measuring the speed comprises a thumbwheel (28) which is fired on the shaft of the cylinder (27) and which cooperates with a sensor (29), in that the controlling means is a numerical control (30) and the possible adjusting means is a frequency converter (31).

11. Device as in claim 9, characterised in that at least the first motor (18) is a direct-current electric motor, in that the measuring apparatus is a tachogenerator (32) slaved in rotation to the cylinder (27), in that the controlling means is a variable speed controller (33) and the possible adjusting means is a voltage converter (34).

12. Device as in claim 9, characterised in that at least the first motor (18) is an alternating-current electric motor, in that the measuring apparatus is a tachogenerator slaved in rotation to the cylinder (27), in that the controlling means is a variable frequency controller and the possible adjusting means is a frequency converter.

13. Device as in one of claims 1 to 12, characterised in that the device for determining the lengths of the sections comprises a sensor (35) which acts on the engagement function of the first system (17) when it detects the passage of the front end of the tube (1) being formed, while said sensor is adjustable in its longitudinal position so as to determine a pre-set length of section corresponding to the distance between the position of the knives (4) at rest and the position of said sensor (35).

14. Device as in one of claims 1 to 12, for cardboard tube manufactured continuously by means of a spiral winding machine, characterised in that the device for determining the lengths of the sections comprises a sensor (36, 37) which acts on the engagement function of the first system (17) when it detects the passage of marks printed on the tube (1) being formed or on the last strip (2) forming said tube before winding, said marks being printed at intervals corresponding to the desired lengths of the sections.

15. Device as in one of claims 1 to 12, for cardboard tube manufactured continuously by means of a spiral winding machine, characterised in that the device for determining the lengths of the sections comprises a shaft (27') driven in rotation by a turning element of the spiral winding machine itself, and a thumbwheel (28') which is fired on said shaft (27') and which cooperates with a sensor (29') and at least one pre-selection counter (38) which initiates the engagement function of the first clutch system (17) when the pre-selection values introduced in said counter (38) are reached.

16. Device as in one of claims 1 to 12, for cardboard tube manufactured continuously by means of a spiral winding machine, and in which the device for determining the lengths of the sections comprises a cylinder (27) driven in rotation without slipping by one of the strips (2) forming the tube, before winding, and a thumbwheel (28) which is fixed on the shaft of said cylinder and which cooperates with a sensor (29), characterised in that at least one pre-selection counter (38) is connected to said sensor and initiates the engagement function of the first system (17) when the pre-selection values introduced in said counter are reached.

17. Device as in the combination of claims 9 and 16, characterised in that a single cylinder (27) is provided firstly to slave the first motor (18) by acting on its controlling means (30, 33) through the intermediary of the apparatus (28, 29; 32) for measuring the speed of rotation of said cylinder, and secondly to act on the pre-selection counter (38).

18. Device as in claim 17, for a device provided with a stepper motor as in claim 10, characterised in that a single cylinder (27) and a single thumbwheel (28) cooperating with a sensor (29) are provided to act in parallel firstly on the numerical control (30) of the stepper motor (18), if necessary through the intermediary of the frequency converter (31), and secondly on the pre-selection counter (38).

**Patentansprüche**

1. Schneidvorrichtung für ein kontinuierlich hergestelltes Rohr mit einem Messer-Halter-Wagen (7), der zwecks Verschiebung mittels einer Antriebsmechanik bewegt wird und der mit Mitteln zum Antrieb der Messer (4) sowie mit Mitteln zur Rückführung in die Ausgangsposition nach jedem Schneidvorgang versehen ist, wobei die Antriebsmechanik durch einen ersten rotierenden Motor (18) angetrieben wird, dessen Rotation in Abhängigkeit von der Ablaufgeschwindigkeit des Rohres (1) gesteuert wird, und unter Zwischenschaltung eines ersten Kupplungssystems (17), das von einer Vorrichtung zur Bestimmung der Längen der zu erhaltenden Rohrabschnitte gesteuert ist, dadurch gekennzeichnet, daß die Vorrichtung zur Bestimmung der Längen der zu erhaltenden Rohrabschnitte Erfassungsmittel (35; 36, 37; 27', 28', 29', 38; 27, 28, 29, 38) aufweist, die vorgesehen sind, um nach jeder Rückführung des Wagens (7) in die Ausgangsposition nach einem Schneidvorgang die Einkuppelfunktion des Kupplungssystems anzusteuern, sobald die besagten Mittel festgestellt haben, daß seit Beginn des vorhergehenden Schneidzyklus' eine neue präzise Länge des Rohres (1) abgelaufen ist, derart, daß der Wagen schnell eine Verschiebungsbewegung erfährt, um aufgrund der gesteuerten Antriebsmechanik eine mit der Ablaufgeschwindigkeit des Rohres im Augenblick des Eintritts der Messer im wesentlichen synchrone Geschwindigkeit zu erhalten.

2. Vorrichtung nach Anspruch 1, dadurch gekennzeichnet, daß das erste Kupplungssystem (17) während des Eindringens der Messer (4) in die Wand des Rohres (1) mindestens, bis die besagten Messer ihren Schneidvorgang beenden, ausgekuppelt wird, derart, daß der Wagen und seine Antriebsmechanik während dieser Zeit durch das Rohr selbst angetrieben werden, das sich mit besagten Messern in Eingriff befindet.

3. Vorrichtung nach einem der Ansprüche 1 bis 2, dadurch gekennzeichnet, daß die Antriebsmechanik eine Schubstange (11) aufweist, deren Fuß gelenkig mit dem Wagen (7) verbunden ist und deren Kopf sich in Eingriff mit einem drehbaren Arm (14) des ersten Kupplungssystems befindet.

4. Vorrichtung nach einem der Ansprüche 1 bis 3, dadurch gekennzeichnet, daß die Mittel zur Rückführung des Wagens in die Ausgangsposition außerdem einen Rückführungsmechanismus (20; 12, 15, 16) aufweisen, der am Ende jeder Ablängung wirksam wird, während das erste Kupplungssystem (17) ausgekuppelt ist.

5. Vorrichtung nach Anspruch 4, dadurch gekennzeichnet, daß der Rückführungsmechanismus einen zweiten Antriebsmotor (15) aufweist, der mit einem zweiten Kupplungssystem (16) verbunden ist, während ein Differentialsystem (12) jeweils mit besagtem zweitem Kupplungssystem, dem ersten Antriebsmotor und dem ersten Kupplungssystem verbunden ist, derart, daß es insbesondere möglich ist, die Rückführungsgeschwindigkeit des Wagens in bezug auf seine Vorlaufgeschwindigkeit mittels des besagten zweiten Motors (16) und des besagten Differentials (12) zu erhöhen.

6. Vorrichtung nach einem der Ansprüche 4 und 5, dadurch gekennzeichnet, daß das erste Kupplungssystem (17) außerdem eine Bremsfunktion aufweist, während ein Mittel (26) zur Bestimmung der Position der Antriebsmechanik auf besagte Bremsfunktion einwirkt, derart, daß der Rückführungsmechanismus (20; 12, 15, 16) für den Wagen die Antriebsmechanik in der Nähe, aber diesseits ihrer Ausgangslage positioniert, wobei das besagte erste Kupplungssystem (17) dann wieder eingekuppelt ist, bis das Mittel zur Positionsbestimmung auf die Bremsfunktion und die Auskuppelfunktion des besagten ersten Kupplungssystems einwirkt, welche die besagte Antriebsmechanik in einer vorbestimmten Stellung anhält.

7. Vorrichtung nach einem der Ansprüche 5 und 6, dadurch gekennzeichnet, daß die beiden Antriebsmotoren (18, 15) einerseits und die beiden Kupplungssysteme (17, 16) andererseits vom gleichen Typ sind, wobei die Kupplungssysteme außerdem beide mit einer Bremsfunktion versehen sind.

8. Vorrichtung nach einem der Ansprüche 6 und 7 und bei der die Bewegungen des Eindringens und der Rückstellung in die Ausgangsposition der Messer (4) durch mechanische Mittel (9) in Abhängigkeit von der Position des Messer-Halter-Wagens (7) in Längsrichtung bewirkt werden, dadurch gekennzeichnet, daß das Auskuppeln des ersten Kupplungssystems, die Ansteuerung des Rückführungsmechanismus (20; 12, 15, 16) nach dem Ablängen und das Wiedereinkuppeln des ersten Kupplungssystems nach der besagten Rückführung des Wagens durch Signale gesteuert werden, die von Positionsgebern (22 bis 25) ausgehen, die dafür vorgesehen sind, die Position des besagten Wagens und/oder die eines in Bewegung befindlichen Bauteils zu bestimmen.

9. Vorrichtung nach einem der Ansprüche 1 bis 8, für ein mittels einer Spiralwickelvorrichtung fortlaufend hergestelltes Rohr aus Pappe, dadurch gekennzeichnet, daß die Steuermittel des ersten Antriebsmotors (18) einen durch eines der das Rohr (1) erzeugenden Bänder (2) vor dem Aufrollen ohne Schlupf in Drehung versetzten Zylinder (27) aufweisen, sowie eine Vorrichtung zur Messung der Drehgeschwindigkeit des besagten Zylinders, die auf ein Führungsmittel des besagten Motors (18) einwirkt unter eventueller Zwischenschaltung eines Mittels zur Steuerung in Abhängigkeit von der Herstellungsart, derart, daß die von besagter Vorrichtung zur Messung der Drehgeschwindigkeit ausgehenden Informationen, eventuell korrigiert durch besagte Mittel zur Steuerung, die Führungsmittel ansteuern, die auf besagten Motor (18) einwirken, derart, daß die Drehgeschwindigkeit, welche dieser auf das erste Kupplungssystem (17) überträgt, einer Antriebsgeschwindigkeit des Wagens (7) entspricht, die wenigstens auf einem Teil seiner Laufbahn quasi identisch mit der Ablaufgeschwindigkeit des Rohres (1) bei dessen Herstellung ist.

10. Vorrichtung nach Anspruch 9, dadurch gekennzeichnet, daß mindestens der erste Motor (18) ein elektrischer Schrittmotor ist, daß die Vorrichtung zur Messung der Drehgeschwindigkeit ein Codierrad (28) aufweist, das auf der Achse des Zylinders (27) befestigt ist und mit einem Meßfühler (29) zusammenwirkt, daß das Führungsmittel eine numerische Steuerung (30) und daß das eventuelle Mittel zur Steuerung ein Freqenzumsetzer (31) ist.

11. Vorrichtung nach Anspruch 9, dadurch gekennzeichnet, daß mindestens der erste Motor (18) ein elektrischer Gleichstrommotor ist, daß die Vorrichtung zur Messung ein Tachogenerator (32) ist, der in bezug auf Drehung mit dem Zylinder (27) verbunden ist, daß das Führungsmittel ein Drehzahlregler (33) ist und daß das eventuelle Mittel zur Steuerung ein Spannungswandler (34) ist.

12. Vorrichtung nach Anspruch 9, dadurch gekennzeichnet, daß mindestens der erste Motor (18) ein elektrischer Wechselstrommotor ist, daß die Vorrichtung zur Messung ein Tachogenerator ist, der in bezug auf Drehung mit dem Zylinder (27) verbunden ist, daß das Führungsmittel ein Frequenzregler ist und daß das eventuelle Mittel zur Steuerung ein Frequenzumsetzer ist.

13. Vorrichtung nach einem der Ansprüche 1 bis 12, dadurch gekennzeichnet, daß die Vorrichtung zur Bestimmung der Länge der Rohrabschnitte einen Meßfühler (35) aufweist, welcher auf die Einkuppelfunktion des ersten Systems (17) einwirkt, wenn er den Durchgang des vorderen Endes des in Herstellung befindlichen Rohres (1) feststellt, während der besagte Meßfühler in seiner Position in Längsrichtung einstellbar ist, derart, daß er eine voreingestellte Länge der Rohrabschnitte festlegt, welcher der Entfernung zwischen der Position der Messer (4) im Ruhezustand und der Position des besagten Meßfühlers (35) entspricht.

14. Vorrichtung nach einem der Ansprüche 1 bis 12, für ein mittels einer Spiralwickelvorrichtung fortlaufend hergestelltes Rohr aus Pappe, dadurch gekennzeichnet, daß die Vorrichtung zur Bestimmung der Länge der Rohrabschnitte einen Meßfühler (36, 37) aufweist, der auf die Einkuppelfunktion des ersten Systems (17) einwirkt, wenn er den Durchgang von Marken feststellt, die auf das in Herstellung befindliche Rohr (1) oder auf das letzte, das besagte Rohr erzeugende Band vor dem Aufrollen aufgedruckt sind, wobei besagte Marken in Intervallen aufgedruckt sind, die der gewünschten Länge der Rohrabschnitte entsprechen.

15. Vorrichtung nach einem der Ansprüche 1 bis 12 für ein mittels einer Spiralwickelvorrichtung fortlaufend hergestelltes Rohr aus Pappe, dadurch gekennzeichnet, daß die Vorrichtung zur Bestimmung der Länge der Rohrabschnitte eine Achse (27') aufweist, die durch ein drehendes Bauteil der Spiralwickelvorrichtung selbst in Drehung versetzt wird, sowie ein Codierrad (28'), das auf der besagten Achse (27') befestigt ist und das mit einem Meßfühler (29') zusammenwirkt und mindestens einen Vorgabezähler (38), welcher die Einkuppelfunktion des ersten Kupplungssystems (17) ansteuert, wenn die in den besagten Zähler (38) eingegebenen Vorgabewerte erreicht sind.

16. Vorrichtung nach einem der Ansprüche 1 bis 12 für ein mittels einer Spiralwickelvorrichtung fortlaufend hergestelltes Rohr aus Pappe und bei der die Vorrichtung zur Bestimmung der Längen der Rohrabschnitte einen Zylinder (27) aufweist, der durch eines der das Rohr erzeugenden Bänder (2) vor dem Aufrollen ohne Schlupf in Drehung versetzt wird, sowie ein Codierrad (28), das auf der Welle des besagten Zylinders befestigt ist und das mit einem Meßfühler (29) zusammenwirkt, dadurch gekennzeichnet, daß mindestens ein Vorgabezähler (38) mit dem besagten Meßfühler verbunden ist und die Einkuppelfunktion des ersten Systems (17) ansteuert, wenn die in besagten Zähler eingegebenen Vorgabewerte erreicht sind.

17. Vorrichtung nach der Zusammenfassung der Ansprüche 9 und 16, dadurch gekennzeichnet, daß ein einziger Zylinder (27) vorgesehen ist, der einerseits die Steuerung des ersten Motors (18) sicherstellt, indem er auf sein Führungsmittel (30, 33) unter Zwischenschaltung der Vorrichtung (28, 29, 32) zur Messung der Drehgeschwindigkeit des besagten Zylinders einwirkt und der andererseits auf den Vorgabezähler (38) einwirkt.

18. Vorrichtung nach Anspruch 17 für eine mit einem Schrittmotor versehene Vorrichtung gemäß Anspruch 10, dadurch gekennzeichnet, daß ein einziger Zylinder (27) und ein einziges Codierrad (28), die mit einem Meßfühler (29) zusammenwirken, vorgesehen sind, um parallel einerseits auf die numerische Steuerung (30) des Schrittmotors (18) unter eventueller Zwischenschaltung des Frequenzumsetzers (31) und andererseits auf den Vorgabezähler (38) einzuwirken.

Fig.1

Fig.2

Fig. 3

EP 0 265 471 B1

Fig.4